# EUROPEAN PATENT SPECIFICATION

(11) **EP 3 373 686 B1**
(45) Date of publication and mention of the grant of the patent: **17.02.2021**
(21) Application number: 16862400.5
(22) Date of filing: 02.11.2016
(51) Int. Cl.: H04W 72/12, H04L 1/18

(54) **COMMUNICATION METHOD USING NARROW BAND, AND MTC DEVICE**
KOMMUNIKATIONSVERFAHREN MIT VERWENDUNG VON SCHMALEM BAND UND MTC-VORRICHTUNG
PROCÉDÉ DE COMMUNICATION UTILISANT UNE BANDE ÉTROITE, ET DISPOSITIF MTC

(30) Priority: 05.11.2015 US 201562251660 P; 16.11.2015 US 201562256034 P
(43) Date of publication of application: 12.09.2018
(73) Proprietor: LG Electronics Inc., Yeongdeungpo-gu Seoul 07336 (KR)
(72) Inventor: HWANG, Daesung, Seoul 06772 (KR); YI, Yunjung, Seoul 06772 (KR)
(74) Representative: Plasseraud IP
(86) International application number: PCT/KR2016/012494
(87) International publication number: WO 2017/078384

(56) References cited:
- WO-A1-2015/012665
- WO-A1-2015/012665
- US-A1- 2015 181 576
- US-A1- 2015 249 975
- NOKIA ET AL: "Acknowledgement for explicit UL SPS release in LTE Rel'9", 3GPP DRAFT; R1-093894, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388398, [retrieved on 2009-10-05]
- LG ELECTRONICS: "Repetition level configuration for MTC UEs in enhanced coverage", 3GPP DRAFT; R1-154243 REPETITION LEVEL CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051039446, Retrieved from the Internet: URL:http://www.3gpp.org/ftp/Meetings_3GPP_ SYNC/RAN1/Docs/ [retrieved on 2015-08-23]
- CATT: 'HARQ-ACK Transmission for PUSCH' R1-155166, 3GPP TSG RAN WG1 MEET ING #82BIS 25 September 2015, MALMO, SWEDEN, XP051021220
- SAMSUNG: 'PUSCH HARQ-ACK for Low Cost UEs' R1-155428, 3GPP TSG RAN WG1 #82BIS 25 September 2015, MALMO, SWEDEN, XP051021597

## Description

### BACKGROUND OF THE INVENTION

### Field of the invention

The present invention relates to mobile communication. The invention is set out as in the appended set of claims.

### Related Art

3rd generation partnership project (3GPP) long term evolution (LTE) evolved from a universal mobile telecommunications system (UMTS) is introduced as the 3GPP release 8. The 3GPP LTE uses orthogonal frequency division multiple access (OFDMA) in a downlink and uses single carrier-frequency division multiple access (SC-FDMA) in an uplink. The 3GPP LTE employs multiple input multiple output (MIMO) having up to four antennas.

As disclosed in 3GPP TS 36.211 V10.4.0 (2011-12) "Evolved Universal Terrestrial Radio Access (E-UTRA); Physical Channels and Modulation (Release 10)", a physical channel of LTE may be classified into a downlink channel, i.e., a Physical Downlink Shared Channel (PDSCH) and a Physical Downlink Control Channel (PDCCH), and an uplink channel, i.e., a Physical Uplink Shared Channel (PUSCH) and a Physical Uplink Control Channel (PUCCH).

Meanwhile, extensive research has been actively carried out recently on the communication established between devices or between a device and a server without any human interaction, i.e., without any human intervention, which is also known as Machine Type Communication (MCT). The MCT refers to a concept of a machine device, and not a user device that is used by a human being, performing communication by using the legacy wireless communication network. Meanwhile, the legacy LTE system has been designed for the purpose of supporting high-speed data communication. And, therefore, this has been considered as a highly expensive communication method. However, due to its characteristics, in order to allow the MTC to be widely supplied, the cost range should be maintained at a low level. Accordingly, in order to reduce the cost, a solution for decreasing (or down-sizing) the bandwidth for the MTC to a level that is smaller than the system bandwidth has been considered.

Furthermore, additional discussion is needed in order to allow Semi-Persistent Scheduling (SPS) and Hybrid Automatic Repeat request (HARQ) procedures, and so on, which are designed based on the system bandwidth, to be applied to the MTC performing communication over a decreased (or down-sized) bandwidth. WO2015/012665 discloses a method for performing a random access procedure in a wireless communication system supporting repeated transmission of a same signal. Document: NOKIA ET AL, "Acknowledgement for explicit UL SPS release in LTE Rel'9", 3GPP DRAFT; R1-093894, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20091012), no. Miyazaki; 20091012, XP050388398, discloses details of SPS release in 3GPP. Document: LG ELECTRONICS, "Repetition level configuration for MTC UEs in enhanced coverage", vol. RAN WG1, no. Beijing, China; 20150824 - 20150828, (20150823), 3GPP DRAFT; R1-154243 REPETITION LEVEL CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL http://www.3gpp.org/ftp/Meetings_3GPP_SYNC/RAN1/Docs/, (20150823), XP051039446, discloses details of repetition levels for MTC UEs in enhanced coverage.

### SUMMARY OF THE INVENTION

### Technical Objects

An object of a disclosure of this specification is to provide a method enabling an MTC device to repeatedly transmit and/or receive a channel based on Semi-Persistent Scheduling (SPS).

An object of another disclosure of this specification is to provide a method enabling an MTC device to perform an HARQ process by using an asynchronous method.

### Technical Solutions

In order to achieve the above-described object, a disclosure of this specification provides a communication method according to claim 1.

The method may further include, if a downlink control channel indicating a release of the Semi-Persistent Scheduling (SPS) is not detected, a step of repeatedly transmitting the uplink data channel as many times as a number of repetitions indicated by a base station. Herein, the number of repetitions may be indicated through a Downlink Control Information (DCI) corresponding to the downlink control channel indicating an activation of the Semi-Persistent Scheduling (SPS).

In the step of performing an HARQ process by using an asynchronous method, if a plurality of uplink subframes are scheduled through one DCI, among the plurality of uplink subframes, one uplink subframe may be assigned with an HARQ process number that is indicated through the DCI, and the remaining uplink subframes may be assigned with HARQ process numbers being generated based on the HARQ process number that is indicated through the DCI.

In order to achieve the above-described object, a disclosure of this specification provides a Machine Type Communication (MCT) device according to claim 4 is provided.

### EFFECTS OF THE INVENTION

According to a disclosure of this specification, the MCT device may effectively perform repetitive reception of a PUSCH based on Semi-Persistent Scheduling (SPS) or may effectively perform repetitive transmission of a PDSCH based on Semi-Persistent Scheduling (SPS).

Additionally, according to another disclosure of this specification, the MTC device may efficiently perform an HARQ process by using an asynchronous method.

### BRIEF DESCRIPTION OF THE DRAWINGS

FIG. 1 is a wireless communication system.
FIG. 2 illustrates a structure of a radio frame according to FDD in 3GPP LTE.
FIG. 3 illustrates a structure of a downlink radio frame according to TDD in the 3GPP LTE.
FIG. 4 is an exemplary diagram illustrating a resource grid for one uplink or downlink slot in the 3GPP LTE.
FIG. 5 is a flowchart showing a random access procedure in 3GPP LTE.
FIG. 6 is a diagram for describing a dynamic radio resource allocation (or assignment) method.
FIG. 7 is a diagram for describing the SPS method.
FIG. 8 illustrates an example of the machine type communication (MTC).
FIG. 9 illustrates an example of cell coverage extension or enhancement for an MTC UE.
FIG. 10a and FIG. 10b are exemplary drawings showing examples of a narrow band in which the MTC device is operating.
FIG. 11 is a diagram for describing a cease time of a PDSCH or PUSCH transmission according to this specification.
FIG. 12 is a drawing for describing an HARQ process number assignment according to Method 1 of this specification. Fig. 12 and the corresponding passages referring to Method 1 in this specification are not according to the invention and are present for illustrative purposes only.
FIG. 13 is a drawing for describing an HARQ process number assignment according to Method 2 of this specification.
FIG. 14 is a flow chart showing an MTC communication method according to a disclosure of this specification.
FIG. 15 is a block diagram showing a wireless communication system which implements the present invention.

### DESCRIPTION OF EXEMPLARY EMBODIMENTS

Hereinafter, based on 3rd Generation Partnership Project (3GPP) long term evolution (LTE) or 3GPP LTE-advanced (LTE-A), the present invention will be applied. This is just an example, and the present invention may be applied to various wireless communication systems. Hereinafter, LTE includes LTE and/or LTE-A.

The technical terms used herein are used to merely describe specific embodiments and should not be construed as limiting the present invention.

The expression of the singular number in the present invention includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the present invention and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the invention readily understood, but not should be intended to be limiting of the invention.

As used herein, 'base station' generally refers to a fixed station that communicates with a wireless device and may be denoted by other terms such as eNB (evolved-NodeB), BTS (base transceiver system), or access point.

As used herein, 'user equipment (UE)' may be stationary or mobile, and may be denoted by other terms such as device, wireless device, terminal, MS (mobile station), UT (user terminal), SS (subscriber station), MT (mobile terminal) and etc.

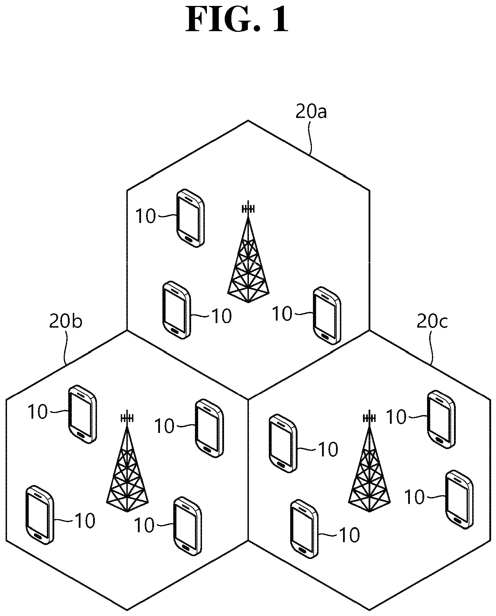

### FIG. 1 illustrates a wireless communication system.

As seen with reference to FIG. 1, the wireless communication system includes at least one base station (BS) 20. Each base station 20 provides a communication service to specific geographical areas (generally, referred to as cells) 20a, 20b, and 20c. The cell can be further divided into a plurality of areas (sectors).

The UE generally belongs to one cell and the cell to which the UE belong is referred to as a serving cell. A base station that provides the communication service to the serving cell is referred to as a serving BS. Since the wireless communication system is a cellular system, another cell that neighbors to the serving cell is present. Another cell which neighbors to the serving cell is referred to a neighbor cell. A base station that provides the communication service to the neighbor cell is referred to as a neighbor BS. The serving cell and the neighbor cell are relatively decided based on the UE.

Hereinafter, a downlink means communication from the base station 20 to the UE 10 and an uplink means communication from the UE 10 to the base station 20. In the downlink, a transmitter may be a part of the base station 20 and a receiver may be a part of the UE 10. In the uplink, the transmitter may be a part of the UE 10 and the receiver may be a part of the base station 20.

Meanwhile, the wireless communication system may be generally divided into a frequency division duplex (FDD) type and a time division duplex (TDD) type. According to the FDD type, uplink transmission and downlink transmission are achieved while occupying different frequency bands. According to the TDD type, the uplink transmission and the downlink transmission are achieved at different time while occupying the same frequency band. A channel response of the TDD type is substantially reciprocal. This means that a downlink channel response and an uplink channel response are approximately the same as each other in a given frequency area. Accordingly, in the TDD based wireless communication system, the downlink channel response may be acquired from the uplink channel response. In the TDD type, since an entire frequency band is time-divided in the uplink transmission and the downlink transmission, the downlink transmission by the base station and the uplink transmission by the terminal may not be performed simultaneously. In the TDD system in which the uplink transmission and the downlink transmission are divided by the unit of a subframe, the uplink transmission and the downlink transmission are performed in different subframes.

Hereinafter, the LTE system will be described in detail.

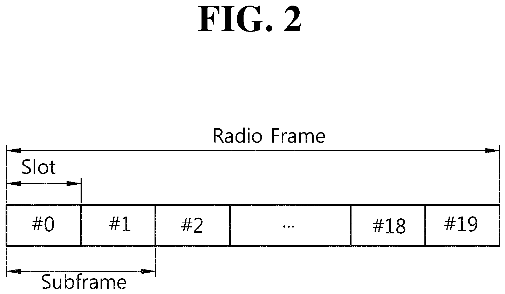

**FIG. 2** **shows a downlink radio frame structure according to FDD of 3rd generation partnership project (3GPP) long term evolution (LTE).**

The radio frame of FIG. 2 may be found in the section 5 of 3GPP TS 36.211 V10.4.0 (2011-12) "Evolved Universal Terrestrial Radio Access (E-UTRA); Physical Channels and Modulation (Release 10)".

The radio frame includes 10 sub-frames indexed 0 to 9. One sub-frame includes two consecutive slots. Accordingly, the radio frame includes 20 slots. The time taken for one sub-frame to be transmitted is denoted TTI (transmission time interval). For example, the length of one sub-frame may be 1ms, and the length of one slot may be 0.5ms.

The structure of the radio frame is for exemplary purposes only, and thus the number of sub-frames included in the radio frame or the number of slots included in the sub-frame may change variously.

Meanwhile, one slot may include a plurality of OFDM symbols. The number of OFDM symbols included in one slot may vary depending on a cyclic prefix (CP).

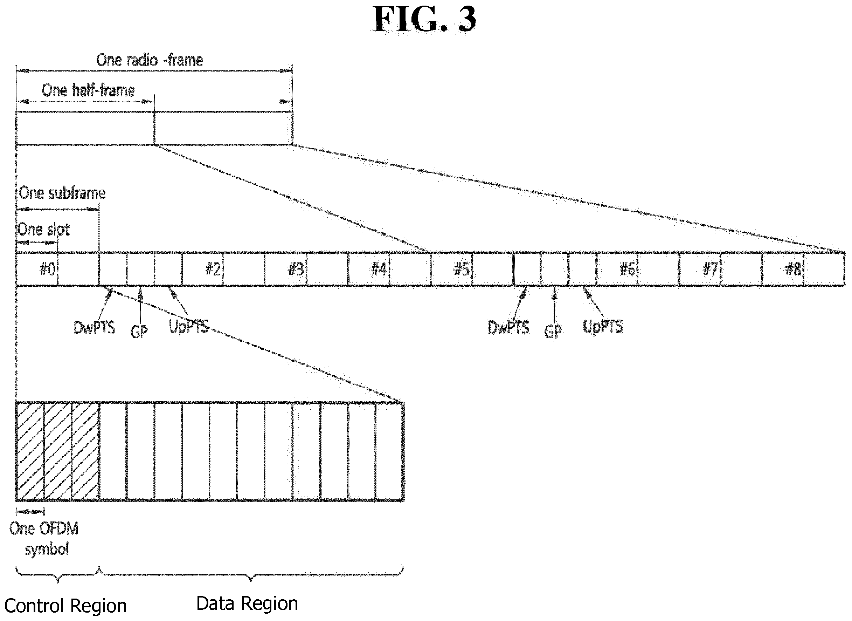

**FIG. 3** **illustrates the architecture of a downlink radio frame according to TDD in 3GPP LTE.**

For this, 3GPP TS 36.211 V10.4.0 (2011-23) "Evolved Universal Terrestrial Radio Access (E-UTRA); Physical Channels and Modulation (Release 8)", Ch. 4 may be referenced, and this is for TDD (time division duplex).

Sub-frames having index #1 and index #6 are denoted special sub-frames, and include a DwPTS(Downlink Pilot Time Slot: DwPTS), a GP(Guard Period) and an UpPTS(Uplink Pilot Time Slot). The DwPTS is used for initial cell search, synchronization, or channel estimation in a terminal. The UpPTS is used for channel estimation in the base station and for establishing uplink transmission sync of the terminal. The GP is a period for removing interference that arises on uplink due to a multi-path delay of a downlink signal between uplink and downlink.

In TDD, a DL (downlink) sub-frame and a UL (Uplink) co-exist in one radio frame. Table 1 shows an example of configuration of a radio frame.

**[Table 1]**

| UL-DL configuration | Switch-point periodicity | Subframe index | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

| | | | | | | | | | | | |
|---|---|---|---|---|---|---|---|---|---|---|---|
| 'D' denotes a DL sub-frame, 'U' a UL sub-frame, and 'S' a special sub-frame. When receiving a UL-DL configuration from the base station, the terminal may be aware of whether a sub-frame is a DL sub-frame or a UL sub-frame according to the configuration of the radio frame. | | | | | | | | | | | |

**[Table 2]**

| Special subframe configuration | Normal CP in downlink | | | Extended CP in downlink | | |
|---|---|---|---|---|---|---|
| | DwPTS | UpPTS | | DwPTS | UpPTS | |
| | | Normal CP in uplink | Extended CP in uplink | | Normal CP in uplink | Extended CP in uplink |
| 0 | 6592*Ts | 2192*Ts | 2560*Ts | 7680*Ts | 2192*Ts | 2560*Ts |
| 1 | 19760*Ts | | | 20480*Ts | | |
| 2 | 21952*Ts | | | 23040*Ts | | |
| 3 | 24144*Ts | | | 25600*Ts | | |
| 4 | 26336*Ts | | | 7680*Ts | 4384*Ts | 5120*ts |
| 5 | 6592*Ts | 4384*Ts | 5120*ts | 20480*Ts | | |
| 6 | 19760*Ts | | | 23040*Ts | | |
| 7 | 21952*Ts | | | - | | |
| 8 | 24144*Ts | | | - | | |

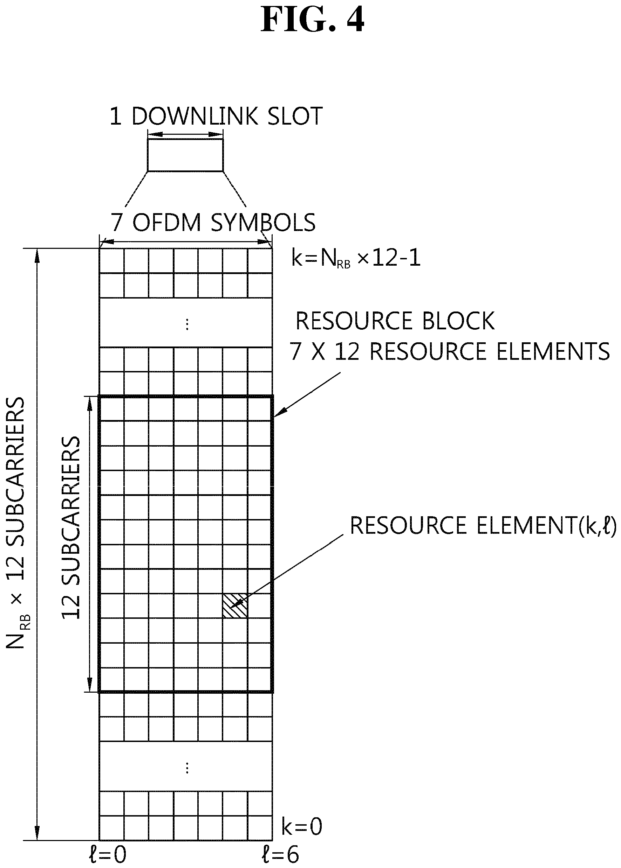

**FIG. 4** **illustrates an example resource grid for one uplink or downlink slot in 3GPPLTE.**

Referring to FIG. 4, the uplink slot includes a plurality of OFDM (orthogonal frequency division multiplexing) symbols in the time domain and NRB resource blocks (RBs) in the frequency domain. For example, in the LTE system, the number of resource blocks (RBs), i.e., NRB, may be one from 6 to 110.

The resource block is a unit of resource allocation and includes a plurality of sub-carriers in the frequency domain. For example, if one slot includes seven OFDM symbols in the time domain and the resource block includes 12 sub-carriers in the frequency domain, one resource block may include 7x12 resource elements (REs).

Meanwhile, the number of sub-carriers in one OFDM symbol may be one of 128, 256, 512, 1024, 1536, and 2048.

In 3GPP LTE, the resource grid for one uplink slot shown in FIG. 4 may also apply to the resource grid for the downlink slot.

The 3GPP LTE classifies a physical channel into a data channel, i.e., a physical downlink shared channel (PDSCH) and a physical uplink shared channel (PUSCH), and a control channel, i.e., a physical downlink control channel (PDCCH), a physical control format indicator channel (PCFICH) and a physical hybrid-ARQ indicator channel (PHICH), and a physical uplink control channel (PUCCH).

An uplink channel includes a PUSCH, a PUCCH, a sounding reference signal (SRS), and a physical random access channel (PRACH).

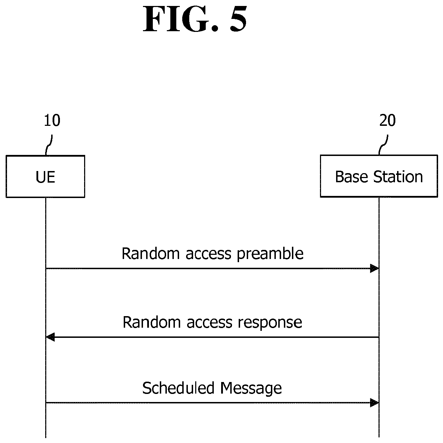

**FIG. 5** **is a flowchart showing a random access procedure in 3GPP LTE.**

The random access procedure is used by the UE 10 to acquire an uplink (UL) synchronization with the BS 20 or to be allocated a UL radio resource.

The UE 10 receives a root index and a physical random access channel (PRACH) configuration index from the BS 20. Each cell has 64 candidate random access preambles defined by a Zadoff-Chu (ZC) sequence. The root index is a logical index for generating the 64 candidate random access preambles by the UE 10.

Transmission of the random access preamble is limited to a specific time and frequency resource for each cell. The PRACH configuration index indicates a specific subframe and preamble format capable of transmitting the random access preamble.

The UE 10 transmits a randomly selected random access preamble to the BS 20. The UE 10 selects one of the 64 candidate random access preambles. In addition, the UE 10 selects a corresponding subframe by using the PRACH configuration index. The UE 10 transmits the selected random access preamble in the selected subframe.

Upon receiving the random access preamble, the BS 20 transmits a random access response (RAR) to the UE 10. The RAR is detected in two steps. First, the UE 10 detects a PDCCH masked with a random access-radio network temporary identifier (RA-RNTI). The UE 10 receives the RAR included in a medium access control (MAC) protocol data unit (PDU) on a PDSCH indicated by the detected PDCCH.

### [<Carrier aggregation>

Hereinafter, a carrier aggregation (CA) system will be described.

The carrier aggregation (CA) system means aggregating multiple component carriers (CCs). By the carrier aggregation, the existing meaning of the cell is changed. According to the carrier aggregation, the cell may mean a combination of a downlink component carrier and an uplink component carrier or a single downlink component carrier.

Further, in the carrier aggregation, the cell may be divided into a primary cell, secondary cell, and a serving cell. The primary cell means a cell that operates at a primary frequency and means a cell in which the UE performs an initial connection establishment procedure or a connection reestablishment procedure with the base station or a cell indicated by the primary cell during a handover procedure. The secondary cell means a cell that operates at a secondary frequency and once an RRC connection is established, the secondary cell is configured and is used to provide an additional radio resource.

As described above, the carrier aggregation system may support a plurality of component carriers (CC), that is, a plurality of serving cells unlike a single carrier system.

The carrier aggregation system may support cross-carrier scheduling. The cross-carrier scheduling is a scheduling method that may perform resource allocation of the PDSCH transmitted through another component carrier through the PDCCH transmitted through a specific component carrier and/or resource allocation of the PUSCH transmitted through other component carrier other than the component carrier fundamentally linked with the specific component carrier.

### <Semi-Persistent Scheduling (SPS) >

Hereinafter, Semi-Persistent Scheduling (SPS) will be described in detail.

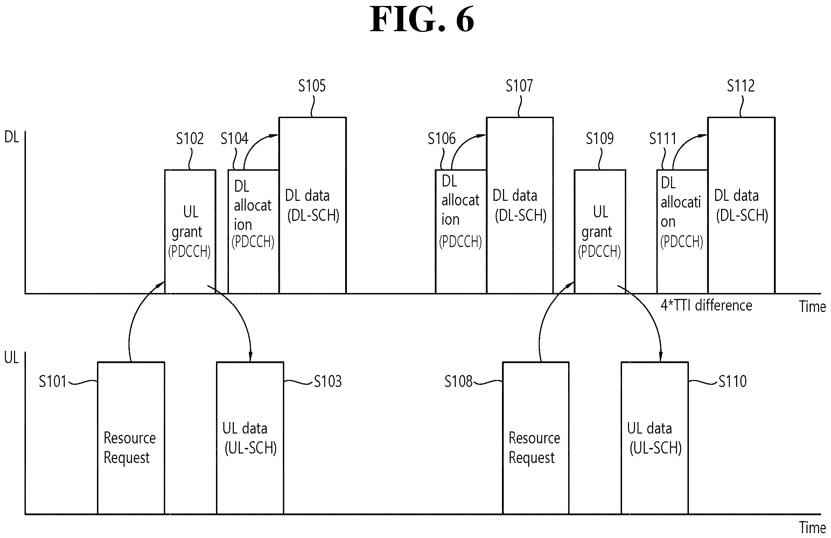

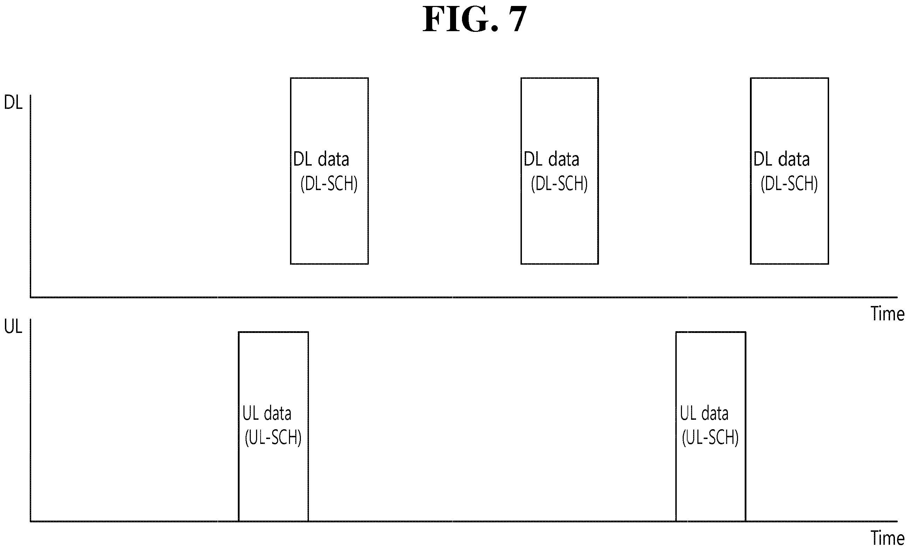

**FIG. 6** **is a diagram for describing a dynamic radio resource allocation (or assignment) method. And,** **FIG. 7** **is a diagram for describing the SPS method.**

A process during which a user equipment (UE) generally transmits data to a base station (a dynamic radio resource allocation (or assignment) method) will hereinafter be described in detail with reference to FIG. 6. Firstly, a UE may request to a base station for radio resources that are required for transmitting generated data (S101). Accordingly, the base station may allocate (or assign) radio resources in accordance with the request for radio resources made by the UE through a control signal (S102). In an LTE system, the resource allocation of a base station for the uplink data transmission of the UE may be transmitted in the form of an uplink (UL) grant. Accordingly, the UE may transmit data to the base station through the allocated (or assigned) radio resources (S103). The above-described radio resource request of the UE, resource allocation (or assignment) of the base station, and the respective uplink data transmission of the UE may be repeated whenever needed (S108-S110).

Meanwhile, if the base station transmits downlink data to the UE, the base station may transmit a downlink (DL) assignment to the UE through a PDCCH and may notify the UE through which radio resource the transmitted data have been transmitted to the UE (S104). And, by using the radio resource corresponding to the above-described downlink assignment message, the base station may transmit data to the UE (S105). Herein, the transmission of the downlink assignment information and the transmission of the downlink data through the corresponding radio resource may be performed within the same Transmission Time Interval (TTI). Furthermore, as shown in FIG. 6, the above-described downlink data transmission process may be repeated.

The SPS radio resource assignment method corresponds to a method that omits the first and second steps among the three steps for transmitting data to the base station ((1) resource request of the UE, (2) resource assignment of the base station, and (3) data transmission of the UE according to the resource assignment). Accordingly, in accordance with the above-described radio resource configuration, the UE may perform a process of directly transmitting data without performing the above-described first and second steps, which respectively correspond to the step of requesting a radio resource and the step of assigning the radio resource. FIG. 7 conceptually illustrates the above-described SPS method. More specifically, in the SPS method, the base station is not required to transmit the radio resource assignment information through the PDCCH each time.

### <Machine type communication (MTC)>

Hereinafter, the MTC will be described.

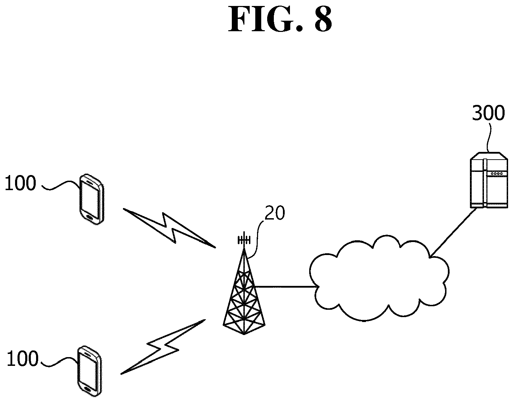

**FIG. 8** **illustrates an example of the machine type communication (MTC).**

The machine type communication (MTC) represents information exchange through between MTC devices 100 through a base station 20 or information exchange between the MTC device 100 and an MTC server 300 through the base station, which does not accompany human interaction.

The MTC server 300 is an entity which communicates with the MTC device 100. The MTC server 300 executes an MTC application and provides an MTC specific service to the MTC device.

The MTC device 100 as a wireless device providing the MTC may be fixed or mobile.

The service provided through the MTC has discrimination from a service in communication in which human intervenes in the related art and includes various categories of services including tracking, metering, payment, a medical field service, remote control, and the like. In more detail, the service provided through the MTC may include electric meter reading, water level measurement, utilization of a monitoring camera, reporting of an inventory of a vending machine, and the like

As peculiarities of the MTC device, since a transmission data amount is small and uplink/downlink data transmission/reception often occurs, it is efficient to decrease manufacturing cost of the MTC device and reduce battery consumption according to the low data transmission rate. The MTC device is characterized in that mobility is small, and as a result, the MTC device is characterized in that a channel environment is not almost changed.

Meanwhile, the MTC is also called Internet of Things (IoT). Accordingly, the MTC device may be called an IoT device.

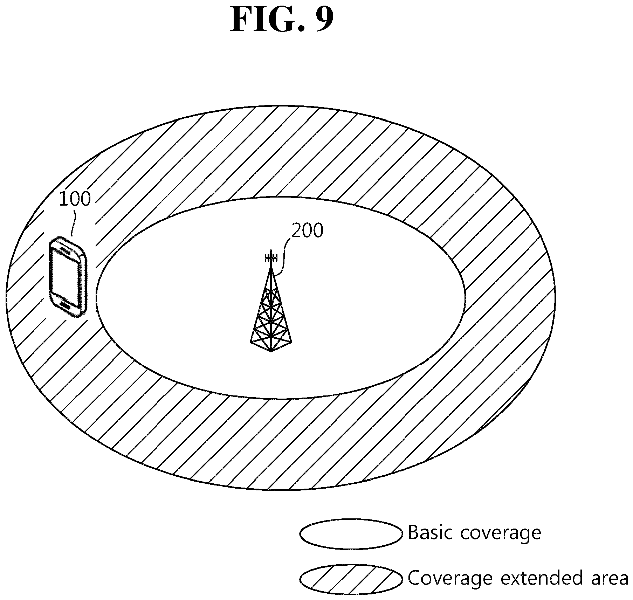

**FIG. 9** **illustrates an example of cell coverage extension or enhancement for an MTC device.**

In recent years, it is considered that cell coverage of the base station extends for the MTC device 100 and various techniques for the cell coverage extension or enhancement are discussed.

However, in the case where the coverage of the cell extends, when the base station transmits a downlink channel to the MTC device positioned in the coverage extension or enhancement area, the MTC device undergoes difficulty in receiving the downlink channel. Similarly, if the MTC device being located in the CE region directly transmits the uplink channel, the base station undergoes difficulty in receiving the uplink channel.

In order to resolve the above-described problem, the downlink channel or the uplink channel may be repeated within several subframes and may then be transmitted. As described above, the transmission of uplink/downlink channels by repeating the corresponding uplink/downlink channels within several subframes, as described above, may be referred to as a bundle transmission.

Accordingly, by having the MTC device or base station receive a bundle of uplink/downlink channels within several subframes and by having them decode part or all of the bundle, the decoding success rate may be increased.

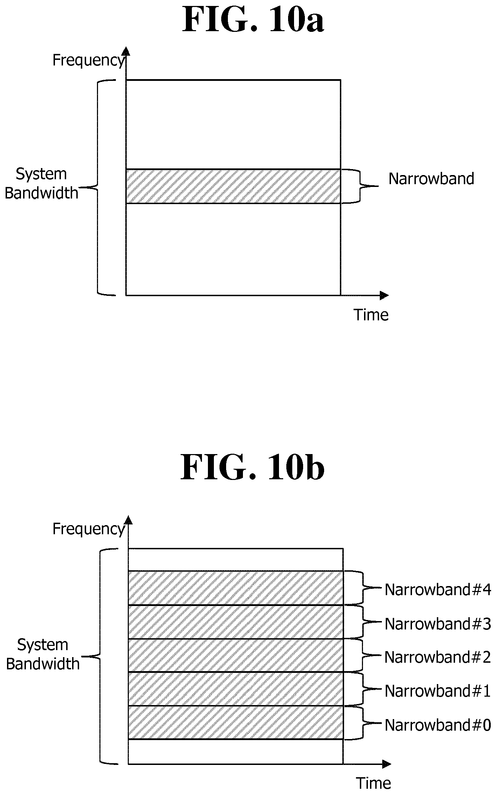

**FIG. 10a and FIG. 10b** **are exemplary drawings showing examples of a narrow band in which the MTC device is operating.**

As one of the solutions for reducing cost of the MTC device (i.e., a low cost MTC device), as shown in FIG. 10a, the MTC device may be operated in a bandwidth that is smaller (or narrower) than the system bandwidth of a cell. For example, the MTC device may use a narrowband having the size of 1.4MHz. However, the present invention will not be limited only to this, and, therefore, the MTC device may also use a narrowband having the size of 180kHz or 200kHz.

At this point, as shown in FIG. 10a, the region of the narrowband in which the MTC device is operated may be positioned at a center region (e.g., 6 PRBs located at the center region) of system bandwidth of the cell.

Alternatively, as shown in FIG. 10b, for multiplexing within a subframe between MTC devices, a narrowband may be configured in one subframe for a plurality of MTC devices, and the plurality of MTC devices may be configured so that each MTC device uses a different narrowband. At this point, most of the MTC devices mat use a narrowband other than the center region (e.g., 6 PRBs located at the center region) of system bandwidth of the cell.

As described above, the MTC communication operating within the down-sized bandwidth may be referred to as a Narrow Band (NB)-IoT communication or NB-CIoT communication.

### <Disclosure of this specification>

As described above, the MTC device operates within a down-sized bandwidth. And, additional discussion is needed in order to allow the SPS and HARQ processes, which are designed based on the system bandwidth, to be applied to the MTC, which performs communication with the down-sized bandwidth.

Accordingly, a disclosure of this specification proposes an SPS transmission solution for the MTC, which performs communication with the down-sized bandwidth. More specifically, this specification proposes a solution allowing the MTC device, which repeatedly transmits a PDSCH or PUSCH within the down-sized bandwidth, to repeatedly transmit the PDSCH or PUSCH without any radio resource assignment (or allocation) through a PDCCH.

Additionally, another disclosure of this specification proposes a solution for performing an HARQ process by using an asynchronous method to an MTC device performing communication within the down-sized bandwidth. More specifically, if of a downlink transmission in the legacy system, an HARQ process using an asynchronous method was performed, wherein, after performing an initial transmission of the HARQ, the re-transmission time point may be varied by the base station. Also, if of an uplink transmission in the legacy system, an HARQ process using a synchronous method was performed, wherein, after performing an initial transmission of the HARQ, the re-transmission is performed at a pre-determined time point. Meanwhile, considering the repeated transmission if a specific transmission channel over a plurality of subframes, it may be advantageous to perform the HARQ process using the asynchronous method even if of an uplink transmission in an MTC. Therefore, this specification proposes a method for configuring a Downlink Control Information (DCI) for performing the HARQ process using the asynchronous method and a method for performing re-transmission during an uplink transmission.

### 1. SPS transmission solution for an MTC device

Firstly, the base station may signal information for the SPS transmission to the UE through a higher-layer signal. In this case, the higher-layer signaling may correspond to a Radio Resource Control (RRC). And, the information for the SPS transmission may include a cycle period according to which the PDSCH or the PUSCH is to be transmitted or an HARQ process number, and so on. However, this specification will not be limited only to this.

The base station may indicate SPS activation or SPS release through a specific PDCCH (or ePDCCH). In this case, even without any radio resource assignment through a separate PDDCH (or ePDCCH), the PDSCH or PUSCH that is being transmitted after the indication of the SPS activation may be transmitted in accordance with a cycle period, which is configured by the information on the SPS transmission. Also, the transmission of the PDSCH or PUSCH, which is transmitted even without any radio resource assignment through a separate PDDCH (or ePDCCH), may be ceased (or suspended) after the indication of the SPS release. In the following description, the time period starting from a time point when the SPS activation is indicated to a time point before the SPS release is indicated is referred to as an SPS section.

If of the PDCCH (or ePDCCH) for indicating the SPS activation or the SPS release, a Cyclical Redundancy Check (CRC) for the DCI may be scrambled by a Cell-Radio Network Temporary Identifier (C-RNTI) of the SPS. Also, if of the PDCCH (or ePDCCH) for indicating the SPS activation or the SPS release, a specific bit field of the DCI may be configured to have a fixed format.

The base station may transmit information on resource assignment for the PDSCH or PUSCH that is to be used during the SPS section, PUCCH resources for the Modulation and Coding Scheme (MCS) and HARQ transmission, and so on, to the UE through the PDCCH (or ePDCCH) indicating SPS activation. Also, if the base station intends to change the information being transmitted through the PDCCH (or ePDCCH), which indicates the SPS activation, the base station may transmit once again (or re-transmit) the PDCCH (or ePDCCH) indicating the SPS activation to the UE.

If of the MTC, the PDSCH or PUSCH may be repeatedly transmitted. The PDSCH or PUSCH, which is based on the SPS, may also be repeatedly transmitted. Generally, the PDSCH or PUSCH being based on the SPS may be used for transmitting a relatively larger data capacity (or data size). Therefore, the repeated transmission of the PDSCH or PUSCH being based on the SPS may be transmitted through a plurality of contiguous (or consecutive) subframes. In this case, the base station may indicate information on a number of repetitions (or repetition level) of the PDSCH or PUSCH being based on the SPS to the UE through a DCI of the PDCCH indicating the SPS activation.

Meanwhile, if of the MTC, the PDCCH (or ePDCCH) for the SPS activation or SPS release may also be repeatedly transmitted. In this case, it may be inefficient to re-transmit the PDCCH (or ePDCCH) for indicating the SPS activation during the SPS section or to release the activated SPS section through the PDCCH (or ePDCCH) for indicating the SPS release. For example, if the base station transmits the PDSCH or PUSCH without any radio resource assignment through a separate PDCCH within the SPS section, the UE should monitor the PDCCH (or ePDCCH) indicating the SPS activation or release while receiving the PDSCH or PUSCH, which is transmitted based on SPS, at the same time. If the UE fails to detect the PDCCH (or ePDCCH) indicating the SPS activation or release, a problem of ambiguity may occur during the number of repetitions (or repetition level) between the UE and the base station. Additionally, the downlink or uplink resource during the section, wherein the problem of ambiguity has occurred, shall be wasted.

In order to avoid the above-described problem, the base station may indicate information on resource assignment for the PDSCH or PUSCH that is to be used during the SPS section, PUCCH resources for the MCS and HARQ transmission, and so on, through a higher-layer signaling. More specifically, the base station may indicate information on resource assignment for the PDSCH or PUSCH that is to be used during the SPS section, PUCCH resources for the MCS and HARQ transmission, and so on, through a higher-layer signaling in limited cases, such as a specific coverage enhancement level, a coverage enhancement group, or a coverage enhancement mode. In other words, by performing indication through the higher-layer signaling only in a case where the number of repetitions is large, the base station may enhance efficiency in the transmission of the information on resource assignment for the PDSCH or PUSCH that is to be used during the SPS section, PUCCH resources for the MCS and HARQ transmission, and so on.

Meanwhile, the base station may indicate a length of the SPS section through the higher layer or the PDCCH (or ePDCCH) indicating the SPS activation, without indicating the SPS release through a separate PDCCH (or ePDCCH). In this case, the information on the SPS section length may correspond to a combined format of an actual system frame number and/or a number of subframes. Additionally, the information on the SPS section length may include a number of repeated PDSCHs or a number of repeated PUSCHs that are based on the SPS. In this case, the information on the SPS section length may be indicated by using different methods in accordance with the coverage enhancement level, the coverage enhancement group, or the coverage enhancement mode.

Furthermore, the length of the SPS section may correspond to a pre-defined value. For example, the length of the SPS section may be pre-defined to have a format of a function corresponding to an SPS transmission interval. In this case, the length of the SPS section may be defined in advance to different values in accordance with the coverage enhancement level, the coverage enhancement group, or the coverage enhancement mode.

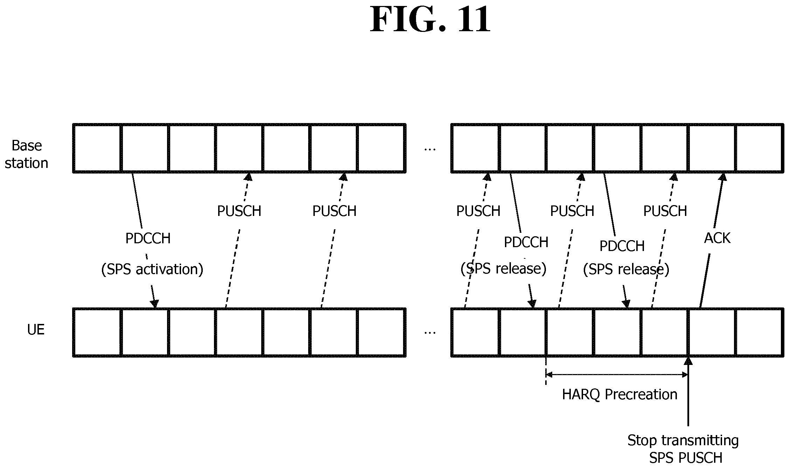

**FIG. 11** **is a diagram for describing a cease time of a PDSCH or PUSCH transmission according to this specification.**

The UE may detect the PDCCH (or ePDCCH) indicating the SPS release during the process of repeatedly receiving the PDSCH or PUSCH based on the SPS. In this case, it will be assumed that the transmission of the PDSCH or PUSCH that is based on the SPS is ceased (or suspended) at a time point when the PDCCH (or ePDCCH) indicating the SPS release is detected or a time point when a specific time has elapsed (or passed) from the time point when the corresponding PDCCH (or ePDCCH) has been detected. And, accordingly, the UE may cease the reception of the PDSCH or may cease the transmission of the PUSCH at the assumed time point.

Meanwhile, it cannot be ensured that the UE can always receive the PDCCH (or ePDCCH) indicating the SPS release. Therefore, as shown in FIG. 11, a time point when the UE transmits an HARQ ACK for the PDCCH indicating the SPS release or a time point when preparations for transmitting an HARQ ACK are completed may be limited to the time point when the transmission of the PDSCH or PUSCH is ceased.

For example, if the base station transmits a PDCCH indicating the SPS release while the PDSCH that is based on the SPS is repeatedly transmitted, the base station may repeatedly transmit the PDSCH that is based on the SPS as many times as the configured number of repetitions until the reception of an ACK for the PDCCH indicating the SPS release from the UE. Alternatively, regardless of whether or not the base station receives the ACK for the PDCCH indicating the SPS release, the base station may also repeatedly transmit the PDSCH that is based on the SPS at a time point when the repeated transmission of the PDCCH indicating the SPS release ends or at a time point when a specific time has elapsed (or passed) starting from the end of the repeated transmission of the PDCCH indicating the SPS release. Moreover, the UE may not receive the PDSCH that is based on the SPS starting from a time point when the PDCCH indicating the SPS release is detected. Herein, the time point when the PDCCH indicating the SPS release is detected may correspond to a last subframe of the repeated M-PDCCH transmission. Additionally, the time point when the PDCCH indicating the SPS release is detected may be determined by considering additional offset in the last subframe of the repeated M-PDCCH transmission. The example that is described above may be applied to the PUSCH in an opposite manner.

### 2. HARQ process using an asynchronous method for the MTC device

Firstly, when performing the uplink transmission, an HARQ process number may be included in the DCI for performing the HARQ process using the asynchronous method. Additionally, a field indicating a Redundancy Version (RV) may be additionally included in the DCI for performing the HARQ process using the asynchronous method. In this case, if the field indicating the RV is not included in the DCI, the RV value may be designated in advance in a specific pattern for an initial transmission. For example, the pattern for designating the RV value may correspond to 0, 2, 3, 1. Additionally, considering the repetition number of the MTC communication, the pattern for designating the RV value may also be configured to have a repeated format, such as 0, 0, ..., 0, 2, 2, ..., 2, ....

When considering the uplink/downlink configuration according to TDD, the DCI being transmitted from one downlink subframe may perform scheduling of a plurality of uplink subframes individually or at the same time. In this case, the HARQ process for the plurality of uplink subframes may be performed by using the following methods.

### 2-1. Method 1.

Method 1 is not according to the invention and is present for illustrative purposes only.

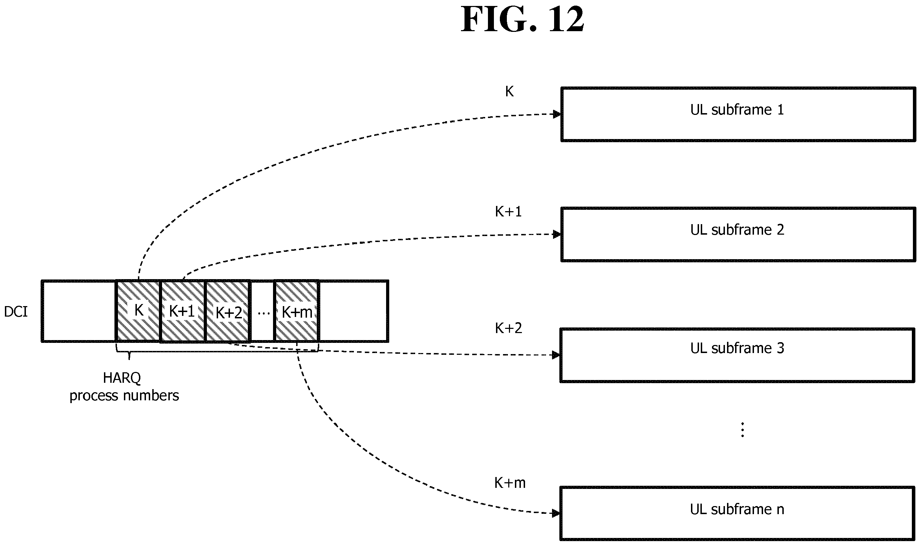

**FIG. 12** **is a drawing for describing an HARQ process number assignment according to Method 1 of this specification.**

As shown in FIG. 12, if the DCI being transmitted through one downlink subframe performs scheduling of a plurality of uplink subframes, the DCI may have an HARQ process number field corresponding to a maximum number of uplink subframes that can be scheduled at the same time. In this case, each uplink subframe may have at least one HARQ process number, and, among the plurality of uplink subframes, the base station may indicate initial transmission or re-transmission of a specific uplink subframe by using the HARQ process number. Also, an indicator indicating whether or not the data included in each uplink subframe correspond to new data.

**2-2. Method 2**

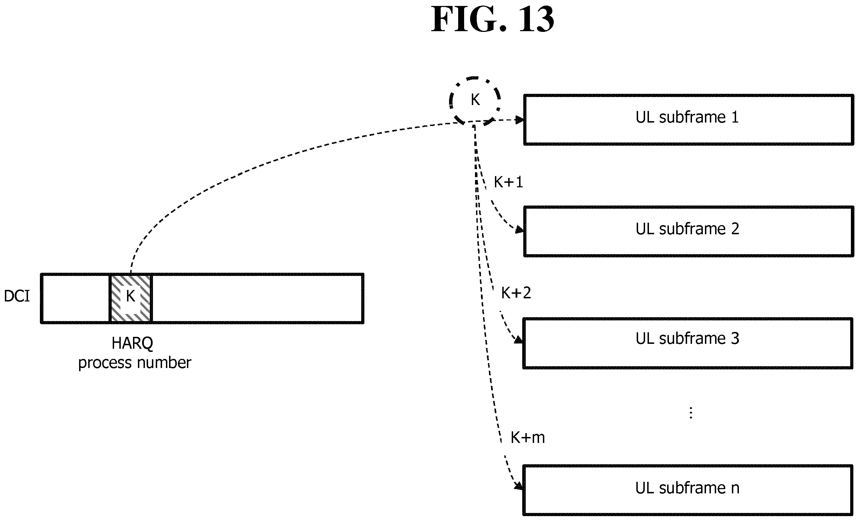

**FIG. 13** **is a drawing for describing an HARQ process number assignment according to Method 2 of this specification.**

As shown in FIG. 13, even if the DCI being transmitted through one downlink subframe performs scheduling of a plurality of uplink subframes, the corresponding DCI may have only one HARQ process number field. In this case, among the plurality of uplink subframes, only one subframe may have an HARQ process number.

More characteristically, a subframe having an HARQ process number may correspond to a foremost uplink subframe within a time axis, among the plurality of uplink subframes. In this case, the HARQ process number for the subframe not being assigned with an HARQ process number may be implicitly defined based on the HARQ process number indicated through the DCI. For example, if the HARQ process number indicated through the DCI is equal to K, the HARQ process number for the subframes not being assigned with the HARQ process number may be defined in the form of K+m. Herein, m may correspond to a pre-defined value. For example, m may be equal to 1.

Alternatively, the sub frame having the HARQ process number may correspond to an uplink subframe, which is selected based on an uplink (UL) index, among the plurality of uplink subframes. For example, if a second uplink subframe within the time axis is selected based on the uplink index, the second uplink subframe may have an HARQ process number. If two uplink subframes are selected based on the uplink index, among the two selected subframes, the foremost uplink subframe is given the HARQ process number, and the HARQ process number of the other uplink frame may be implicitly defined. Alternatively, the two subframes that are selected based on the UL index may both have the same HARQ process number.

Meanwhile, repeated transmission may be excessively performed for a specific channel excessive in an MTC environment. For example, if of a coverage enhancement (CE) mode B, excessively repeated transmission may be performed. In this case, a field for a Downlink Assignment Index (DAI) and an uplink (UL) index may not be included in the DCI. As described above, if the field for a DAI and a UL index is not included in the DCI, the identification (or differentiation) of the plurality of uplink subframes being scheduled by one DCI may become insignificant. Therefore, the plurality of uplink subframes being scheduled by one DCI may always be included in the same uplink subframe bundle. In other words, although a field for a DAI and a UL index is not included in the DCI, if the plurality of uplink subframes are scheduled by one DCI, the corresponding uplink subframes may always be given the same HARQ process information.

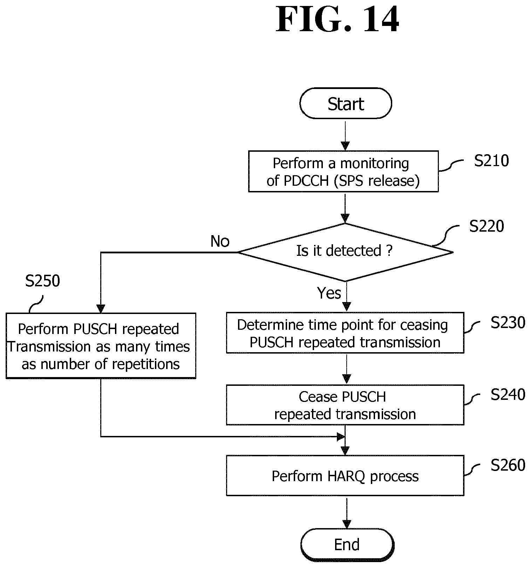

**FIG. 14** **is a flow chart showing an MTC communication method according to a disclosure of this specification.**

Referring to FIG. 14, during the process of repeatedly transmitting a PUSCH that is based on the SPS, the MTC device monitors a PDCCH indicating an SPS release (S210).

The MTC device determines whether or not a PDCCH indicating the SPS release is detected (S220). Based on the determined result, if a PDCCH indicating the SPS release is detected, the MTC device determines (or decides) a time point at which the repeated transmission of the PUSCH being based on the SPS is to be ceased (S230). At this point, the time point at which the repeated transmission of the PUSCH being based on the SPS is to be ceased may be determined as a time point when the UE transmits an HARQ ACK for the PDCCH indicating the SPS release or a time point when preparations for transmitting an HARQ ACK are completed. Thereafter, the MTC device ceases the transmission of the PUSCH, which is repeatedly transmitted, in accordance with the determined time point (S240).

Conversely, if a PDCCH indicating the SPS release is not detected, the MTC device may repeatedly transmit the PUSCH as many times as a number of repetitions being indicated by the base station (S250). At this point, the number of repetitions may be indicated by the base station through a DCI corresponding to the PDCCH, which indicates an SPS activation.

The MTC device performs an HARQ process for a repeated PUSCH transmission that is based on the SPS (S260). More specifically, if a plurality of uplink subframes are scheduled through one DCI, the MCT device may assign different HARQ process numbers being indicated through the DCI for each of the plurality of uplink subframes. Also, if a plurality of uplink subframes are scheduled through one DCI, among the plurality of uplink subframes, the MCT device may assign one uplink subframe with an HARQ process number that is indicated through the DCI, and the MCT device may assign the remaining uplink subframes with HARQ process numbers being generated based on the HARQ process number that is indicated through the DCI.

The embodiments of the present invention may be implemented through diverse means. For example, the embodiments of the present invention may be implemented in the form of hardware, firmware, and software, or a combination of two or more of the same. This will hereinafter be described in more detail with reference to the accompanying drawing.

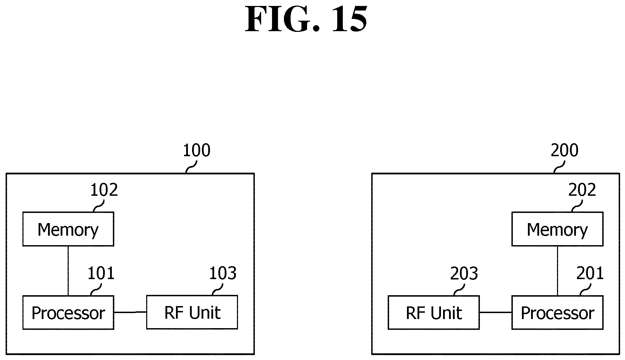

**FIG. 15** **is a block diagram showing a wireless communication system which implements the present invention.**

The base station 200 includes a processor 201, a memory 202, and a radio frequency RF unit 203. The memory 202 is connected to the processor 201 to store various information for driving the processor 201. The RF unit 203 is connected to the processor 201 to transmit and/receive a wireless signal. The processor 201 implements a suggested function, procedure, and/or method. An operation of the base station 200 according to the above embodiment may be implemented by the processor 201.

The wireless device (e.g., MTC device) 100 includes a processor 101, a memory 102, and an RF unit 103. The memory 102 is connected to the processor 101 to store various information for driving the processor 101. The RF unit 103 is connected to the processor 101 to transmit and/receive a wireless signal. The processor 101 implements a suggested function, procedure, and/or method.

The processor may include an application-specific integrated circuit (ASIC), another chipset, a logic circuit, and/or a data processor. A memory may include read-only memory (ROM), random access memory (RAM), a flash memory, a memory card, a storage medium, and/or other storage devices. An RF unit may include a baseband circuit to process an RF signal. When the embodiment is implemented, the above scheme may be implemented by a module procedure, function, and the like to perform the above function. The module is stored in the memory and may be implemented by the processor. The memory may be located inside or outside the processor, and may be connected to the processor through various known means.

In the above exemplary system, although methods are described based on a flowchart including a series of steps or blocks, the present invention is limited to an order of the steps. Some steps may be generated in the order different from or simultaneously with the above other steps. The invention is defined by the appended claims.

## Claims

1. A communication method of a 3GPP Machine Type Communication, MTC, device, comprising:
receiving a downlink control information, DCI, scheduling a repeated Semi-Persistent Scheduling, SPS, transmission of a same uplink data on a plurality of uplink subframes,
during repeatedly transmitting the same uplink data via an uplink data channel based on the SPS, monitoring a downlink control channel indicating a release of the SPS;
if the downlink control channel indicating the release of the SPS is detected, determining a first time point to stop the repeated transmission of the same uplink data via the uplink data channel and a second time point to transmit a Hybrid Automatic Repeat request, HARQ, acknowledge, ACK for the downlink control channel transmission indicating the SPS release;
stopping the repeated transmission of the same uplink data via the uplink data channel at the determined first time point; and
transmitting the HARQ ACK at the determined second time point,
wherein the first time point is the same as the second time point, charactensed in that
when the plurality of uplink subframes are scheduled through the same DCI, the foremost uplink subframe among the plurality of uplink subframes is assigned an HARQ process number that is indicated through the DCI, and
wherein the remaining uplink subframes are assigned HARQ process numbers being generated based on the HARQ process number by adding successively a pre-defined value to the HARQ process number of the foremost uplink subframe.

2. The communication method of claim 1, further comprising: if the downlink control channel indicating the release of the SPS is not detected, keeping on repeatedly transmitting the same uplink data via the uplink data channel as many times as a number of repetitions indicated by a base station.

3. The communication method of claim 2, wherein the number of repetitions is indicated through a Downlink Control Information, DCI, corresponding to the downlink control channel indicating an activation of the SPS.

4. A 3GPP Machine Type Communication, MTC, device performing communication, comprising:
a radio frequency, RF, unit transmitting and receiving radio signals; and
a processor controlling the RF unit,
wherein the processor controls the RF unit so as
to receive a downlink control information, DCI, scheduling a repeated Semi-Persistent Scheduling, SPS, transmission of a same uplink data on a plurality of uplink subframes
to monitor a downlink control channel indicating a release of the SPS, during repeatedly transmitting the same uplink data via an uplink data channel based on the SPS, and
if the downlink control channel indicating the release of the SPS is detected, to determine a first time point to stop the repeated transmission of the same uplink data via the uplink data channel and a second time point to transmit a Hybrid Automatic Repeat request, HARQ, acknowledge, ACK for the downlink control channel transmission indicating the SPS release,
to stop the repeated transmission of the same uplink data via the uplink data channel based on the determined first time point,
to transmit the HARQ ACK at the determined second time point,
wherein the first time point is the same as the second time point,
**characterised in that**
when the plurality of uplink subframes are scheduled through the same DCI, the foremost uplink subframe among the plurality of uplink subframes is assigned an HARQ process number that is indicated through the DCI, and
wherein the remaining uplink subframes are assigned HARQ process numbers being generated based on the HARQ process number by adding successively a pre-defined value to the HARQ process number of the foremost uplink subframe.

5. The MTC device of claim 4, wherein, if the downlink control channel indicating the release of the SPS is not detected, the processor keeps on repeatedly transmitting the same uplink data via the uplink data channel as many times as a number of repetitions indicated by a base station.

6. The MTC device of claim 5, wherein the number of repetitions is indicated through a Downlink Control Information, DCI, corresponding to the downlink control channel indicating an activation of the SPS.

## Patentansprüche

1. Kommunikationsverfahren einer 3GPP-Maschinenkommunikations-, MTC-, Vorrichtung, das aufweist:
Empfangen einer Downlink-Steuerinformation, DCI, die eine wiederholte semipersistente Zeitplanungs-, SPS-, Übertragung gleicher Uplink-Daten auf mehreren Uplink-Subrahmen zeitlich plant,
während des wiederholten Übertragens der gleichen Uplink-Daten über einen Uplink-Datenkanal basierend auf der SPS Überwachen eines Downlink-Steuerkanals, der eine Freigabe der SPS anzeigt;
wenn der Downlink-Steuerkanal, der die Freigabe der SPS anzeigt, erfasst wird, Bestimmen eines ersten Zeitpunkts, um die wiederholte Übertragung der gleichen Uplink-Daten über den Uplink-Datenkanal zu stoppen, und eines zweiten Zeitpunkts, um eine hybride automatische Wiederholungsanforderungs-, HARQ-, Quittung, ACK, für die Downlink-Steuerkanalübertragung, welche die SPS-Freigabe anzeigt, zu übertragen;
Stoppen der wiederholten Übertragung der gleichen Uplink-Daten über den Uplink-Datenkanal zu dem bestimmten ersten Zeitpunkt; und
Übertragen der HARQ-ACK zu dem bestimmten zweiten Zeitpunkt,
wobei der erste Zeitpunkt der gleiche wie der zweite Zeitpunkt ist,
**dadurch gekennzeichnet, dass**,
wenn die mehreren Uplink-Subrahmen durch die gleiche DCI zeitlich geplant werden, der vorderste Uplink-Subrahmen von den mehreren Uplink-Subrahmen einer HARQ-Prozessnummer zugeordnet wird, die durch die DCI angezeigt wird, und
wobei die verbleitenden Uplink-Subrahmen HARQ-Prozessnummern zugeordnet werden, die basierend auf der HARQ-Prozessnummer erzeugt werden, indem nacheinander ein vordefinierter Wert zu der HARQ-Prozessnummer des vordersten Uplink-Subrahmens addiert wird.

2. Kommunikationsverfahren nach Anspruch 1, das ferner aufweist:
wenn der Downlink-Steuerkanal, der die Freigabe der SPS anzeigt, nicht erfasst wird, so viele Male wie eine Anzahl von Wiederholungen von einer Basisstation angezeigt wird, weiterhin wiederholtes Übertragen der gleichen Uplink-Daten über den Uplink-Datenkanal.

3. Kommunikationsverfahren nach Anspruch 2,
wobei die Anzahl von Wiederholungen durch eine Downlink-Steuerinformation, DCI, angezeigt wird, die dem Downlink-Steuerkanal entspricht, der eine Aktivierung der SPS anzeigt.

4. 3GPP-Maschinenkommunikations-, MTC-, Vorrichtung, die eine Kommunikation durchführt, die aufweist:
eine Funkfrequenz-, RF-, Einheit, die Funksignale überträgt und empfängt; und
einen Prozessor, der die RF-Einheit steuert,
wobei der Prozessor die RF-Einheit steuert, um:
eine Downlink-Steuerinformation, DCI, zu empfangen, die eine wiederholte semipersistente Zeitplanungs-, SPS-, Übertragung gleicher Uplink-Daten auf mehreren Uplink-Subrahmen zeitlich plant,
während des wiederholten Übertragens der gleichen Uplink-Daten über einen Uplink-Datenkanal basierend auf der SPS einen Downlink-Steuerkanal, der eine Freigabe der SPS anzeigt, zu überwachen, und
wenn der Downlink-Steuerkanal, der die Freigabe der SPS anzeigt, erfasst wird, einen ersten Zeitpunkt, um die wiederholte Übertragung der gleichen Uplink-Daten über den Uplink-Datenkanal zu stoppen, und einen zweiten Zeitpunkt zu bestimmen, um eine hybride automatische Wiederholungsanforderungs-, HARQ-, Quittung, ACK, für die Downlink-Steuerkanalübertragung, welche die SPS-Freigabe anzeigt, zu übertragen;
die wiederholte Übertragung der gleichen Uplink-Daten über den Uplink-Datenkanal zu dem bestimmten ersten Zeitpunkt zu stoppen; und
die HARQ-ACK zu dem bestimmten zweiten Zeitpunkt zu übertragen,
wobei der erste Zeitpunkt der gleiche wie der zweite Zeitpunkt ist,
**dadurch gekennzeichnet, dass**,
wenn die mehreren Uplink-Subrahmen durch die gleiche DCI zeitlich geplant werden, der vorderste Uplink-Subrahmen von den mehreren Uplink-Subrahmen einer HARQ-Prozessnummer zugeordnet wird, die durch die DCI angezeigt wird, und
wobei die verbleitenden Uplink-Subrahmen HARQ-Prozessnummern zugeordnet werden, die basierend auf der HARQ-Prozessnummer erzeugt werden, indem nacheinander ein vordefinierter Wert zu der HARQ-Prozessnummer des vordersten Uplink-Subrahmens addiert wird.

5. MTC-Vorrichtung nach Anspruch 4, wobei, wenn der Downlink-Steuerkanal, der die Freigabe der SPS anzeigt, nicht erfasst wird, der Prozessor so viele Male wie eine Anzahl von Wiederholungen von einer Basisstation angezeigt wird, weiterhin wiederholt die gleichen Uplink-Daten über den Uplink-Datenkanal überträgt.

6. MTC-Vorrichtung nach Anspruch 5, wobei die Anzahl von Wiederholungen durch eine Downlink-Steuerinformation, DCI, angezeigt wird, die dem Downlink-Steuerkanal entspricht, der eine Aktivierung der SPS anzeigt.

## Revendications

1. Procédé de communication d'un dispositif de communication de type machine, MTC, 3GPP, comprenant :
la réception d'une information de commande de liaison descendante, DCI, programmant une transmission de programmation semi-persistante, SPS, répétée d'une même donnée de liaison montante sur une pluralité de sous-trames de liaison montante ;
au cours de la transmission à répétition de la même donnée de liaison montante via un canal de données de liaison montante sur la base de la SPS, la surveillance d'un canal de commande de liaison descendante indiquant une libération de la SPS ;
si le canal de commande de liaison descendante indiquant la libération de la SPS est détecté, la détermination d'un premier point dans le temps pour arrêter la transmission répétée de la même donnée de liaison montante via le canal de données de liaison montante et d'un second point dans le temps pour transmettre un accusé de réception, ACK, de demande de répétition automatique hybride, HARQ, pour la transmission de canal de commande de liaison descendante indiquant la libération de SPS ;
l'arrêt de la transmission répétée de la même donnée de liaison montante via le canal de données de liaison montante au premier point déterminé dans le temps ; et
la transmission de l'ACK HARQ au second point déterminé dans le temps,
dans lequel le premier point dans le temps est le même que le second point dans le temps,
**caractérisé en ce que**
lorsque la pluralité de sous-trames de liaison montante sont programmées par l'intermédiaire de la même DCI, il est assigné à la sous-trame de liaison montante la plus à l'avant parmi la pluralité de sous-trames de liaison montante un numéro de processus HARQ qui est indiqué par l'intermédiaire de la DCI, et
dans lequel il est assigné aux sous-trames de liaison montante restantes des numéros de processus HARQ qui sont générés sur la base du numéro de processus HARQ en ajoutant successivement une valeur prédéfinie au numéro de processus HARQ de la sous-trame de liaison montante la plus à l'avant.

2. Procédé de communication selon la revendication 1, comprenant en outre :
si le canal de commande de liaison descendante indiquant la libération de la SPS n'est pas détecté, la poursuite de la transmission à répétition de la même donnée de liaison montante via le canal de données de liaison montante pendant un nombre de répétitions indiqué par une station de base.

3. Procédé de communication selon la revendication 2, dans lequel le nombre de répétitions est indiqué par l'intermédiaire d'une information de commande de liaison descendante, DCI, correspondant au canal de commande de liaison descendante indiquant une activation de la SPS.

4. Dispositif de communication de type machine, MTC, 3GPP, réalisant une communication, comprenant :
une unité de radiofréquences, RF, émettant et recevant des signaux radio ; et
un processeur commandant l'unité RF,
dans lequel le processeur commande l'unité RF de manière à :
recevoir une information de commande de liaison descendante, DCI, programmant une transmission de programmation semi-persistante, SPS, répétée d'une même donnée de liaison montante sur une pluralité de sous-trames de liaison montante,
surveiller un canal de commande de liaison descendante indiquant une libération de la SPS, au cours de la transmission à répétition de la même donnée de liaison montante via un canal de données de liaison montante sur la base de la SPS, et
si le canal de commande de liaison descendante indiquant la libération de la SPS est détecté, déterminer un premier point dans le temps pour arrêter la transmission répétée de la même donnée de liaison montante via le canal de données de liaison montante et un second point dans le temps pour transmettre un accusé de réception, ACK, de demande de répétition automatique hybride, HARQ, pour la transmission de canal de commande de liaison descendante indiquant la libération de SPS,
arrêter la transmission répétée de la même donnée de liaison montante via le canal de données de liaison montante sur la base du premier point déterminé dans le temps, transmettre l'ACK HARQ au second point déterminé dans le temps,
dans lequel le premier point dans le temps est le même que le second point dans le temps,
**caractérisé en ce que**
lorsque la pluralité de sous-trames de liaison montante sont programmées par l'intermédiaire de la même DCI, il est assigné à la sous-trame de liaison montante la plus à l'avant parmi la pluralité de sous-trames de liaison montante un numéro de processus HARQ qui est indiqué par l'intermédiaire de la DCI, et
dans lequel il est assigné aux sous-trames de liaison montante restantes des numéros de processus HARQ qui sont générés sur la base du numéro de processus HARQ en ajoutant successivement une valeur prédéfinie au numéro de processus HARQ de la sous-trame de liaison montante la plus à l'avant.

5. Dispositif MTC selon la revendication 4, dans lequel, si le canal de commande de liaison descendante indiquant la libération de la SPS n'est pas détecté, le processeur poursuit la transmission à répétition de la même donnée de liaison montante via le canal de données de liaison montante pendant un nombre de répétitions indiqué par une station de base.

6. Dispositif MTC selon la revendication 5, dans lequel le nombre de répétitions est indiqué par l'intermédiaire d'une information de commande de liaison descendante, DCI, correspondant au canal de commande de liaison descendante indiquant une activation de la SPS.
